# EUROPÄISCHE PATENTANMELDUNG

(11) **EP 2 749 442 A2**
(43) Veröffentlichungstag der Anmeldung: **02.07.2014**
(21) Anmeldenummer: 13002443.3
(22) Anmeldetag: 27.06.2013
(51) Int. Cl.: B60K 1/04

(54) **Straßenfahrzeug-Elektromobilitätssystem**

(30) Priorität: 12.08.2012 DE 102012015835; 12.12.2012 DE 102012024265
(71) Anmelder: Richter, Berta, 86163 Augsburg (DE)
(72) Erfinder: Richter, Hans, 86163 Augsburg (DE)
(74) Vertreter: Gallo, Wolfgang

(57) **Zusammenfassung**

Elektromobilitätssystem für Straßenfahrzeuge mit den Rädern zugeordneten Niederspan-nungs-Elektromotoren, insbesondere piezoelektrischen Antrieben, wobei dem Fahrzeug eine in einem Batterieaufnahmeraum angeordnete Batterieanlage zugeordnet ist, die aus einer Mehrzahl einzelner stabartiger Batterieblöcke (1) besteht, die im Batterieaufnahmeraum nebeneinander und/oder übereinander angeordnet sind und jeweils über elektrische Steckverbindungen mit dem Fahrzeug verbindbar sind.

## Beschreibung

Die Erfindung betrifft ein Elektromobilitätssystem für Straßenfahrzeuge, nämlich ein System zur schnellen und effizienten Ausstattung und Wechselausstattung von elektrisch betriebenen Straßenfahrzeugen mit Batterien, die insbesondere mit piezoelektrischem Antrieb versehen sind, wie er aus dem europäischen Patent EP 2 013 965 bekannt ist, oder einem anderen elektrischen Antrieb mit den Rädern zugeordneten, mit niedriger Spannung betriebenen Elektromotoren.

Die Idee des Elektroautos ist alt, aber die Umsetzung erweist sich bisher mehr oder weniger als Totgeburt. Elektroautos sind schwer, verhältnismäßig langsam und teuer. Ihr größtes Problem ist jedoch die geringe Reichweite und das langwierige Aufladen der Batterien. Man hat sich mit Hybridantrieben geholfen, um das Reichweitenproblem abzuschwächen, um innerorts mit Elektroantrieb und außerorts mit Benzin- oder Dieselantrieb zu fahren. Das erfordert zusätzliche Aggregate und bedingt zusätzliches Gewicht und geht zudem auf Kosten von verfügbarem Raum.

Das Kernproblem des herkömmlichen Elektroautos sind, trotz erheblicher Fortschritte in der Batterietechnologie, die Bereitstellung ausreichender Batteriekapazität zum Erzielen einer Reichweite, die mit derjenigen von benzin- oder dieselgetriebenen Fahrzeugen vergleichbar ist.

Ein weiteres Problem bei herkömmlichen Elektroautos ist der Umstand, dass eine hohe Betriebsspannung erforderlich ist, um Größe und Gewicht des Elektromotors in vernünftigen Grenzen halten zu können, was wiederum Sicherheitsprobleme bedingt.

Aufgabe der Erfindung ist es daher, ein neues und besseres Elektromobilitätssystem für Straßenfahrzeuge zu schaffen, mit dem die oben aufgezeigten Probleme überwunden werden können.

Diese Aufgabe wird durch das im Anspruch 1 angegebene Batteriekonzept für Straßenfahrzeuge mit piezoelektrischem Antrieb oder mit einem anderen, mit niedriger Spannung arbeitenden und auf die Räder direkt wirkenden Antrieb gelöst.

Bei piezoelektrischem Fahrzeugantrieb, wie er in der EP 2 013 956 beschrieben ist, wirken piezoelektrische Motoren direkt auf die Räder, beispielsweise auf die beiden Hinterräder eines Fahrzeugs, in dem sie beispielsweise mit bremsscheibenartigen Antriebsscheiben zusammenwirken, die mit den Rädern verbunden sind. Dabei sind keine Getriebe erforderlich. Wegen des Wegfalls des üblichen Motors wird im Motorraum erheblich Platz verfügbar, der zur Unterbringung von Batterien genutzt werden kann.

Außerdem kann bei piezoelektrischem Fahrzeugantrieb mit niedrigen Spannungen von beispielsweise 12 Volt oder 24 Volt gearbeitet werden, so dass das Gefahrenpotential aufgrund elektrischer Spannungen ganz erheblich reduziert wird.

Im Gegensatz zu einer fest eingebauten Batterieanlage bei herkömmlichen Elektroautos, die durch Anstecken eines Netzkabels an einem Ladestecker aus einem stationären Netz aufgeladen werden müssen, sieht die Erfindung ein Batteriekonzept vor, bei dem die Batterieanlage in eine Mehrzahl einzelner Batterieblöcke unterteilt ist, die im Fahrzeug nicht fest eingebaut sind, sondern über Steckverbindungen mit dem Fahrzeug verbindbar sind und hinsichtlich Größe und Gewicht so bemessen sind, dass sie leicht austauschbar sind. Die Batterieblöcke sind zweckmäßigerweise in der Gestalt länglicher Batteriestäbe mit rechteckiger Querschnittsform ausgebildet, so dass sie leicht in einer Reihe nebeneinander im Fahrzeug angeordnet werden können, wobei auch beispielsweise zwei Reihen übereinander angeordnet werden können.

Wegen des aufgrund des piezoelektrischen Fahrzeugantriebs freigewordenen verfügbaren Raums im Fahrzeug kann die Batterieanlage auch so groß bemessen werden, dass Reichweiten von ca. 800 km realisiert werden können, ohne das Fahrzeuggewicht gegenüber herkömmlichen Elektrofahrzeugen zu vergrößern. Dann kann ein elektrisch angetriebenes Fahrzeug mit mineralölgetriebenen Fahrzeugen tatsächlich konkurrieren.

Das Aufladen der Batterien braucht nicht bei im Fahrzeug eingesetzten Batterieblöcken zu erfolgen, sondern kann auch dadurch erfolgen, dass die Batterieblöcke einfach ausgetauscht werden und aus dem Fahrzeug herausgenommene Batterieblöcke extern aufgeladen werden, während das Fahrzeug durch Einsetzen frisch aufgeladener Batterieblöcke sofort wieder fahrbereit ist.

Es kann also am Fahrzeug eine Anschlußmöglichkeit für ein Ladekabel vorgesehen sein, um bei über Nacht stehendem Fahrzeug ein Aufladen der im Fahrzeug belassenen Batterieblöcke aus dem Netz vorzunehmen. Ebenso kann der Benutzer zusätzliche Batterieblöcke vorhalten, die er jeweils tagsüber beispielsweise über eine Solaranlage auf dem Garagendach auflädt, um dann bei Bedarf die Batterieblöcke im Fahrzeug tauschen zu können.

Damit die Batterieblöcke leicht transportabel sind, sind sie vorzugsweise an einem Ende mit Rollen versehen und am anderen Ende mit einem Griff, so dass sie wie ein Rollkoffer ohne Anstrengung gerollt werden können. Am Fahrzeug kann eine ausklappbare oder ausziehbare Rampe eingebaut sein, oder es kann eine am Fahrzeug einhängbare Rampe vorgesehen sein, um die rollkofferartig bewegbaren Batterieblöcke in den Batterieraum des Fahrzeugs hinein oder aus diesem heraus rollen zu können, ohne die Batterieblöcke heben zu müssen.

Die Batterieblöcke können mit Mitteln zum Anzeigen des augenblicklichen Ladezustands, des Alters, der verbleibenden Batteriekapazität, der Häufigkeit des bereits erfolgten Aufladens und des Alterungszustands und/oder zur Anzeige ähnlicher nützlicher Informationen ausgestattet sein.

Schließlich sieht die Erfindung das Einrichten kommerzieller Batterietauschstationen vor, bei denen gegen eine Gebühr leere Batterieblöcke gegen volle Batterieblöcke getauscht werden können. Diese Stationen können als Umlaufmagazine ausgestaltet sein, wo benutzte Batterieblöcke an einer leeren Stelle eingeschoben und damit gleich mit der Steckverbindung, mit der sie auch im Fahrzeug elektrisch ankuppelbar sind, mit einer Ladestromquelle verbunden werden, und wo volle Batterien an einer Entnahmestelle herausgezogen werden können. Ein solches Magazin kann insbesondere als Endlos-Umlaufmagazin gestaltet sein, das so konzipiert ist, dass während der Verweilphase des Batterieblocks im Magazin dieser vollständig aufgeladen wird.

Schließlich umfaßt die Erfindung auch eine spezielle Konstruktion der elektrischen Leitungsverbindung zwischen der Fahrzeuganlage und den an den Rädern angeordneten Elektromotoren, insbesondere Piezomotoren. Da diese mit niedriger Spannung arbeiten, was auch unabdingbare Voraussetzung für die vorstehend beschriebene Modularität des Batteriesystems ist, sind große Leiterquerschnitte erforderlich, um die karosseriefeste elektrische Anlage des Fahrzeugs mit den an den Rädern angeordneten und folglich mit den Rädern beweglichen Motoren zu verbinden. Bei den Hinterrädern sind es nur die Federwege zwischen Karosserie und Rädern; bei den Vorderrädern sind es außerdem noch die Lenkbewegungen, so dass eine Beweglichkeit der Kabelverbindungen in dreidimensionaler Hinsicht notwendig ist. Erfindungsgemäß ist dazu die Leitungsverbindung zwischen jedem einen Rad zugeordneten Motor und der karosseriefesten Anlage durch Auflösen des Gesamtquerschnitts der Leitung in eine Mehrzahl von Flachbändern vorgesehen, wobei die Flachbänder in einem gewissen gegenseitigen Abstand zueinander gehalten werden, so dass nicht nur Biegebewegungen sondern auch Drehbewegungen möglich sind.

Die Erfindung wird nachstehend unter Bezugnahme auf die anliegenden Zeichnungen mehr im einzelnen erläutert. In den Zeichnungen zeigt:
- Fig. 1: einen Batterieblock des erfindungsgemäßen Systems in Seitenansicht,
- Fig. 2: den Batterieblock nach Fig. 1 in Stirnansicht (von oben),
- Fig. 3: schematisch die Frontansicht eines Autos mit eingesetzten Batterieblöcken,
- Fig. 4: eine schematische Seitenansicht eines Autos mit eingesetzten Batterieblöcken,
- Fig. 5: in schematischer Darstellung ein BatterieblockAustauschmagazin, und
- Fig. 6: in schematischer Darstellung eine Leitungsverbindung, wie sie zwischen einem radseitigen Elektromotor und der karosseriefesten elektrischen Anlage vorgesehen ist, in Seitenansicht.

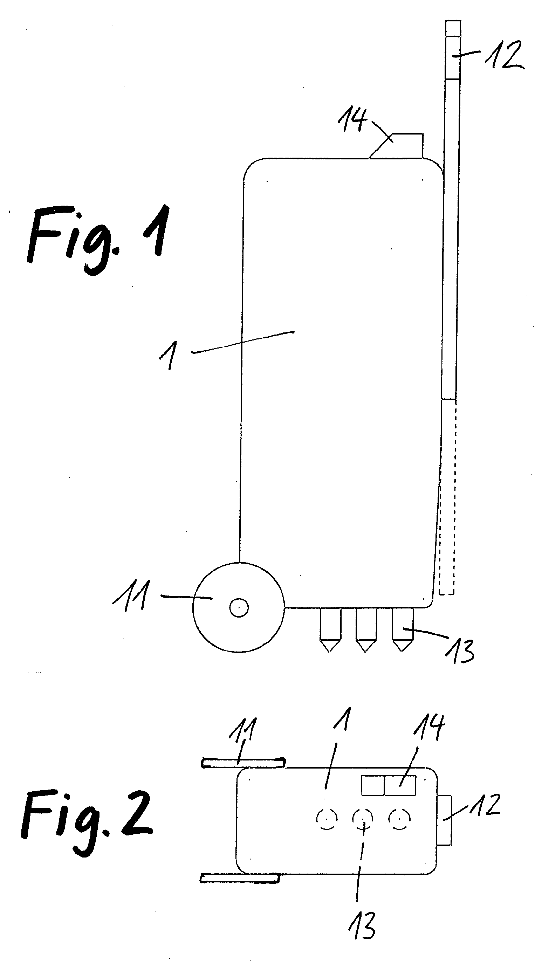

Fig. 1 zeigt einen Batterieblock 1 in Seitenansicht. Der Batterieblock ist an seinem vorderen Ende mit Rollen 11 ausgestattet und am anderen Ende mit einem Handgriff 12. An dem mit den Rollen 11 ausgestatteten Ende sind schematisch dargestellte Steckkontakte 13 sichtbar, die zur elektrischen Steckverbindung des Batterieblocks im Fahrzeug oder an einer externen Ladestation vorgesehen sind. Ebenso ist eine Anzeigeeinrichtung 14 schematisch dargestellt, wo wichtige Daten über den Zustand des Batterieblocks angezeigt werden können.

Fig. 2 zeigt den Batterieblock nach Fig. 1 in der Stirnansicht von oben, also in der Draufsicht, bezogen auf Fig. 1. Wie man aus den Fig. 1 und 2 erkennen kann, hat der Batterieblock eine stabartige Konfiguration mit Rechteckquerschnitt, so dass diese leicht Seite an Seite nebeneinander in einer Reihe angeordnet werden können. Die Darstellungen sind nur schematisch gehalten und zeigen das Prinzip. Die praktische Ausführung kann davon abweichen, insbesondere hinsichtlich der Anordnung der schematisch angedeuteten Rollen 11, die so konzipiert sein kann, dass die Rollen seitwärts nicht über die Seitenflächen des Batterieblocks 1 überstehen und die Batterieblöcke dann in der Batterieblockaufnahme unmittelbar nebeneinander angeordnet sein können.

Im Fahrzeug ist eine Batterieblockaufnahme vorgesehen, in welche solche Batterieblöcke einsetzbar sind. Dabei ist die Anordnung so getroffen, dass eine Mehrzahl von solchen Batterieblöcken nebeneinander im Fahrzeug anzuordnen sind. Im Fahrzeug sind jeweils zu den Steckverbindungselementen der Batterieblöcke komplementäre Steckverbindungselemente vorgesehen. Der Handgriff 12 an jedem Batterieblock 1 dient nicht nur zur Handhabung beim Transport der Batterieblöcke vom und zum Fahrzeug, sondern auch zum leichten Einschieben in die jeweilige Batterieblockaufnahme des Fahrzeugs bzw. zum Herausziehen des Batterieblocks aus der Batterieblockaufnahme.

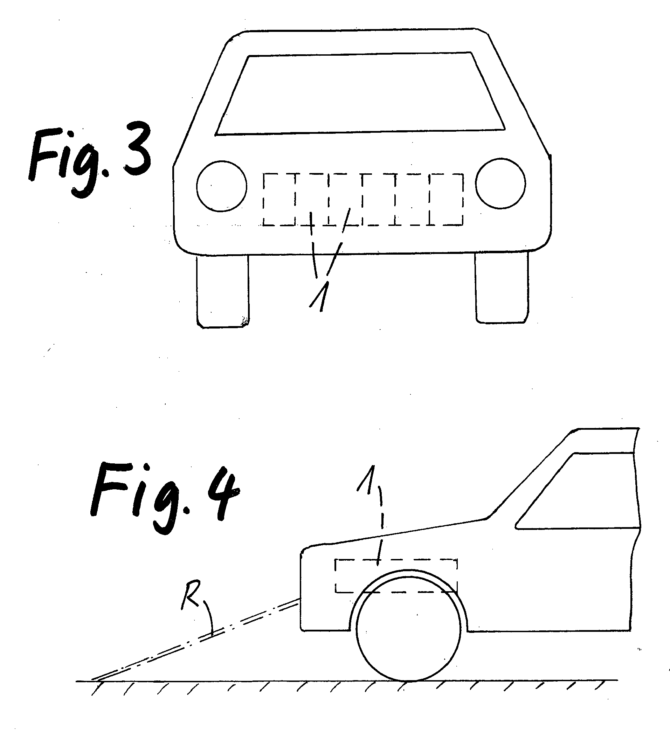

Die Fig. 3 und 4 zeigen in schematischer Frontansicht und Seitenansicht ein Fahrzeug mit einer Batterieblockanordnung, wobei Fig. 3 beispielsweise sechs nebeneinander angeordneten Batterieblöcke zeigt. Dabei können die Batterieblöcke abweichend von der schematischen Darstellung in Fig. 3 auch in zwei Reihen übereinander und gegebenenfalls in Längsrichtung gestaffelt im Fahrzeug angeordnet sein. Fig. 4 zeigt außerdem schematisch angedeutet eine Rampe R, die am Fahrzeug eingehängt werden kann oder dort schon ausklappbar und/oder ausziehbar eingebaut ist, um Batterieblöcke leicht aus dem Fahrzeug herausrollen oder in das Fahrzeug hineinrollen zu können.

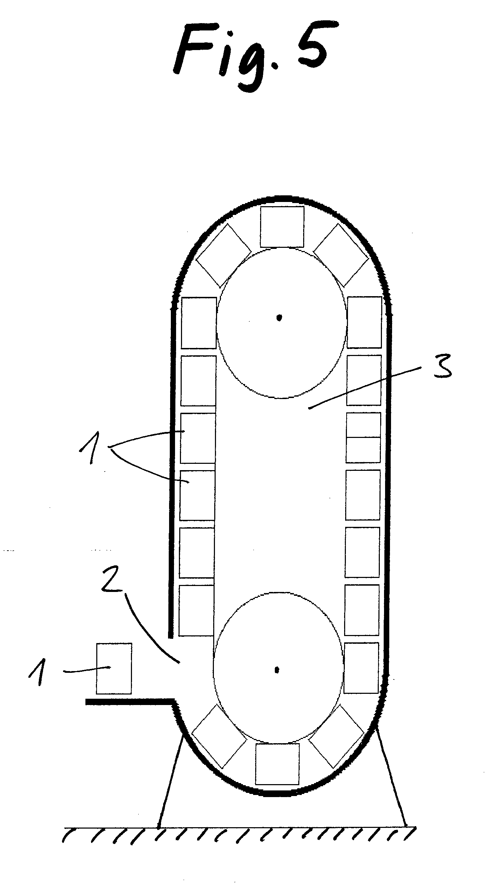

Fig. 5 zeigt schematisch eine in Gestalt eines Umlaufmagazins ausgeführte Batterieblock-Tauschstation. Die Batterieblöcke 1 sind dort nur schematisch dargestellt.

An einer Eingabe-/Ausgabestelle 2 können leere Batterieblöcke eingegeben und volle Batterieblöcke entnommen werden. Innerhalb des Magazins 3, das als Umlaufmagazin ausgebildet ist, sind die Batterieblöcke über ein gleiche Steckverbindung wie im Fahrzeug mit einer elektrischen Ladestromquelle verbunden. Ein eingeschobener leerer Batterieblock wird also während seiner Verweildauer im Magazin wieder voll aufgeladen.

An einer Batterieblock-Tauschstation können mehrere derartige Umlaufmagazine parallel angeordnet sein. Die Station kann also Automat ausgebildet sein, wo nach Zahlung einer entsprechenden Gebühr durch Münzeinwurf oder bargeldlose Zahlung sich ein Eingabefach öffnet, in welches ein leerer Batterieblock einschiebbar ist, und anschließend ein Ausgabefach öffnet, aus dem ein aufgeladener Batterieblock entnommen werden kann. Auf diese Weise kann auch sichergestellt werden, dass ein geladener Batterieblock nur entnommen werden kann, wenn zuvor ein Batterieblock in das Eingabefach eingeschoben worden ist.

Mit solchen Batterieblock-Tauschstationen kann ähnlich dem Tankstellennetz ein Netz aufgebaut werden, so dass ein Austausch von Batterieblöcken an vielen Orten möglich ist.

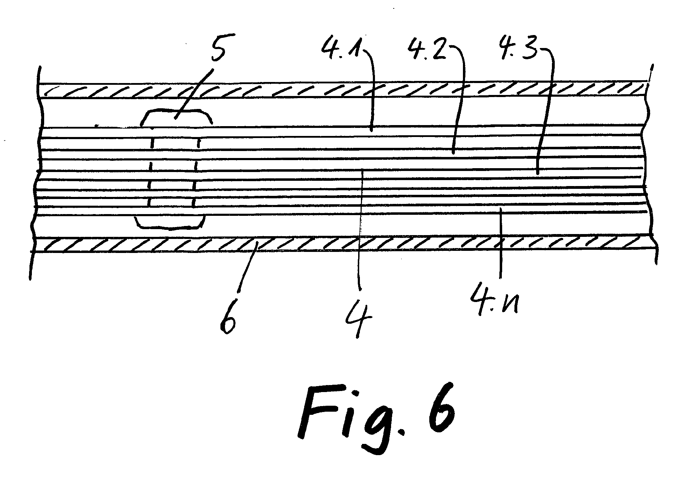

Fig. 6 zeigt in schematischer Seitenansicht und stark vergrößert den Aufbau einer elektrischen Leitungsverbindung zwischen einem radseitigen Motor und der karosseriefesten elektrischen Anlage. Die elektrische Leitungsverbindung 4 ist aufgeteilt in eine Mehrzahl von Flachleitern 4.1, 4.2, 4.3 ... 4.n, und diese liegen nicht aneinander an, sondern sind durch Abstandhalter 5 in gewissen gegenseitigem Abstand gehalten, so dass nicht nur eine Biegebewegung, sondern auch eine Verdrehbewegung möglich ist und dadurch eine Beweglichkeit der Leitungsverbindung im dreidimensionalen Raum möglich ist.

Die Leitungsverbindung ist von einem Schlauch 6 umgeben, der zum einen als Isolator dient, zum anderen auch eine Luftzirkulation und in diesem Zusammenhang beispielsweise eine Ausnutzung der entstehenden Wärme zur Fahrzeugbeheizung oder dgl. ermöglicht. Da mit niedriger Spannung gearbeitet wird, sind die Stromstärken im Betrieb sehr hoch, weshalb entsprechend hohe Leitungsquerschnitte notwendig sind und auch Wärme erzeugt wird.

## Patentansprüche

1. Elektromobilitätssystem für Straßenfahrzeuge mit den Rädern zugeordneten Niederspannungs-Elektromotoren, insbesondere piezoelektrischen Antrieben, wobei dem Fahrzeug eine in einem Batterieaufnahmeraum angeordnete Batterieanlage zugeordnet ist, die aus einer Mehrzahl einzelner stabartiger Batterieblöcke (1) besteht, die im Batterieaufnahmeraum nebeneinander und/oder übereinander angeordnet sind und jeweils über elektrische Steckverbindungen mit dem Fahrzeug verbindbar sind.

2. System nach Anspruch 1, wobei an jedem Batterieblock starr angeordnete elektrische Steckverbindungselemente (13) mit entsprechenden, im Fahrzeug starr angeordneten elektrischen Gegenelementen zusammenwirken und das elektrische Kuppeln oder Trennen beim Einschieben oder Herausziehen des Batterieblocks (1) in eine oder aus einer Batterieblockaufnahme des Fahrzeugs erfolgt.

3. System nach Anspruch 1 oder 2, wobei jeder Batterieblock (1) mit einem Handgriff (12) zu dessen Handhabung versehen ist.

4. System nach einem der Ansprüche 1 bis 3, wobei jeder Batterieblock (1) mit Rollen (11) zum Transport zum oder vom Fahrzeug ausgestattet ist.

5. System nach einem der Ansprüche 1 bis 4, wobei jeder Batterieblock (1) mit Meß- und Anzeigemitteln (14) versehen ist, um batteriebezogene Daten wie Ladezustand und Batteriekapazität zu erfassen und anzuzeigen.

6. System nach Anspruch 4, wobei eine mit dem Fahrzeug verbindbare oder im Fahrzeug eingebaute, ausklappbare und/oder ausziehbare Rampe (R) vorgesehen ist, um eine Verbindung vom Straßenniveau zum Batterieaufnahmeraum herzustellen.

7. System nach einem der Ansprüche 1 bis 6, wobei zur Bereitstellung frisch aufgeladener Batterieblöcke Batterieblock-Tauschstationen vorgesehen sind, die in Gestalt von Magazinen (3) ausgebildet sind, in welche jeweils ein entladener Batterieblock eingeschoben und aus welchen sodann ein frisch geladener Batterieblock entnommen werden kann, wobei in dem Austauschmagazin die Batterieblöcke in gleicher Weise wie im Fahrzeug mit ihren Steckverbindern mit einer Ladestromquelle verbindbar sind.

8. System nach Anspruch 7, wobei die Austauschmagazine (3) als Endlos-Umlaufmagazine ausgebildet sind.

9. System nach einem der Ansprüche 1 bis 5, wobei die elektrische Verbindung zwischen den Niederspannungs-Elektromotoren an den Rädern und der Batterieanlage mindestens in dem bewegungsbehafteten Bereich in eine Mehrzahl von Flachbandleitern (4.1, 4.2, 4.3) unterteilt ist, die durch Abstandhalter (5) mit gewissem gegenseitigem Abstand gehalten werden.

10. System nach Anspruch 9, wobei die elektrischen Leitungsverbindungen (4) innerhalb eines Schlauchs (6) angeordnet sind.
